(19) **Europäisches Patentamt / European Patent Office / Office européen des brevets**

(11) **EP 4 692 231 A1**

(12) **EUROPEAN PATENT APPLICATION**

(43) Date of publication:
**11.02.2026 Bulletin 2026/07**

(51) International Patent Classification (IPC):
**C08L 65/00** (2006.01)  **C08L 67/00** (2006.01)
**C08L 69/00** (2006.01)  **C08L 71/00** (2006.01)
**C08L 77/00** (2006.01)

(21) Application number: 24193005.6

(22) Date of filing: **06.08.2024**

(52) Cooperative Patent Classification (CPC):
(C-Sets available)
**C08L 69/00; C08K 7/06; C08K 7/14; C08L 65/00; C08L 71/00** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: SHPP Global Technologies B.V.
**4612 PX Bergen op Zoom (NL)**

(72) Inventors:
- **WANG, Jian**
  **Shanghai, 201319 (CN)**
- **CHENG, Yunan**
  **Shanghai, 201319 (CN)**
- **ZHENG, Yun**
  **Shanghai, 201319 (CN)**

(74) Representative: **Modiano, Gabriella Diana**
**Modiano & Partners SA**
**Steinsdorfstraße 14**
**80538 München (DE)**

(54) **THERMOPLASTIC COMPOSITIONS HAVING HIGH STIFFNESS AND LOW EMI SHIELDING PROPERTIES**

(57)  Thermoplastic compositions include: a) from about 30 wt% to about 75 wt% of a polymer base resin including polycarbonate, polybutylene terephthalate, polyamine, polyphenylene sulfide, polyetherimide, polyphenylene oxide, copolymers thereof, or a combination thereof; b) from about 5 wt% to about 20 wt% of a first reinforcing filler including a high modulus fiber having a tensile modulus of at least 200 GPa; c) from about 5 wt% to about 45 wt% of a second reinforcing filler including a flat glass fiber, a round glass fiber, or a combination thereof; and d) from about 0.1 wt% to about 2 wt% of at least one additional additive. The composition has a density of no more than 1.60 g/cm$^3$, a flexural modulus of at least 12 GPa, and an EMI shielding effectiveness of no more than 35 dB at a frequency of from 1 GHz to 6 GHz.

(52) Cooperative Patent Classification (CPC): (Cont.)

C-Sets
**C08L 65/00, C08K 7/14, C08K 7/06;**
**C08L 69/00, C08K 5/523, C08K 7/06, C08K 7/14;**
**C08L 71/00, C08K 7/14, C08K 7/06**

**Description**

**FIELD OF THE DISCLOSURE**

The present disclosure relates to thermoplastic compositions including a high modulus reinforcing fiber that have good stiffness and electromagnetic interference (EMI) shielding properties.

**BACKGROUND OF THE DISCLOSURE**

Thermoplastic compositions having high modulus properties are widely used in cover and housing applications for consumer electronics devices such as mobile phones, tablets, and notebooks. Glass fiber (GF) and carbon fiber (CF) are two efficient fillers to improve the stiffness of the compositions. When glass fiber is used, a high loading is needed to achieve high modulus properties. For example, compositions including polycarbonate (PC) resin and having glass fiber loadings of up to 50 wt% can achieve a flexural modulus (FM) of up to 15 gigapascals (GPa). A much lower filler content can achieve the same FM properties if carbon fiber is used. For example, the FM of carbon fiber-reinforced PC compositions can be 16 GPa or higher with as little as 25 wt% carbon fiber content. Accordingly, carbon fiber-filled compositions may be desirable for applications needing higher modulus, lower weight, and better surface quality. However, when used in electric and electronic applications, the high electrical conductivity of the carbon fiber-filled compositions can result in undesirable EMI (electro-magnetic interference) shielding properties. To avoid this EMI shielding problem, high modulus insulating materials may be used to over-mold the carbon fiber-filled compositions at the antenna area; unfortunately this is a complicated and expensive process. If carbon fiber-reinforced compositions could have lower EMI shielding properties (i.e., higher radio frequency transparency), only one material would be necessary in certain applications, substantially decreasing cost and complexity of the manufacture.

These and other shortcomings are addressed by aspects of the present disclosure.

**SUMMARY**

Aspects of the disclosure relate to thermoplastic compositions including: a) from about 30 wt% to about 75 wt% of a polymer base resin including polycarbonate (PC), polybutylene terephthalate (PBT), polyamine (PA), polyphenylene sulfide (PPS), polyetherimide (PEI), polyphenylene oxide (PPO), copolymers thereof, or a combination thereof; b) from about 5 wt% to about 20 wt% of a first reinforcing filler including a high modulus fiber having a tensile modulus of at least 200 gigapascals (GPa) as evaluated in accordance with ISO 11566; c) from about 5 wt% to about 45 wt% of a second reinforcing filler including a flat glass fiber, a round glass fiber, or a combination thereof; and d) from about 0.1 wt% to about 2 wt% of at least one additional additive. The composition includes from about 10 wt% to about 50 wt% of a combination of the first reinforcing filler and the second reinforcing filler. The combined weight percent value of all components does not exceed 100 wt%, and all weight percent values are based on the total weight of the composition. The composition has a density of no more than 1.60 grams per cubic centimeter (g/cm$^3$) as evaluated in accordance with ASTM D792. The composition has a flexural modulus of at least 12 gigapascals (GPa) as evaluated in accordance with ASTM D790 at 3.2 millimeters (mm) and 1.27 mm per minute (mm/min). The composition has an electromagnetic interference (EMI) shielding effectiveness of no more than 35 decibels (dB) at a frequency of from 1 gigahertz (GHz) to 6 GHz as evaluated in accordance with ASTM D4935.

**DETAILED DESCRIPTION**

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

**Definitions**

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a first reinforcing filler" includes mixtures of two or more reinforcing fillers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i{}^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Thermoplastic Compositions**

Aspects of the disclosure relate to thermoplastic compositions including: a) from about 30 wt% to about 75 wt% of a polymer base resin including polycarbonate (PC), polybutylene terephthalate (PBT), polyamine (PA), polyphenylene sulfide (PPS), polyetherimide (PEI), polyphenylene oxide (PPO), copolymers thereof, or a combination thereof; b) from about 5 wt% to about 20 wt% of a first reinforcing filler including a high modulus fiber having a tensile modulus of at least 200 gigapascals (GPa) as evaluated in accordance with ISO 11566; c) from about 5 wt% to about 45 wt% of a second reinforcing filler including a flat glass fiber, a round glass fiber, or a combination thereof; and d) from about 0.1 wt% to about 2 wt% of at least one additional additive. The composition includes from about 10 wt% to about 50 wt% of a combination of the first reinforcing filler and the second reinforcing filler. The combined weight percent value of all components does not exceed 100 wt%, and all weight percent values are based on the total weight of the composition. The composition has a density of no more than 1.60 grams per cubic centimeter (g/cm$^3$) as evaluated in accordance with ASTM D792. The composition has a flexural modulus of at least 12 gigapascals (GPa) as evaluated in accordance with ASTM D790 at 3.2 millimeters (mm) and 1.27 mm per minute (mm/min). The composition has an electromagnetic interference (EMI) shielding effectiveness of no more than 35 decibels (dB) at a frequency of from 1 gigahertz (GHz) to 6 GHz as evaluated in accordance with ASTM D4935.

The composition includes from about 30 wt% to about 75 wt% of a polymer base resin including polycarbonate (PC), polybutylene terephthalate (PBT), polyamine (PA), polyphenylene sulfide (PPS), polyetherimide (PEI), polyphenylene oxide (PPO), copolymers thereof, or a combination thereof. In some aspects the polymer base resin includes a polycarbonate homopolymer, a polycarbonate copolymer, or a combination thereof.

In specific aspects the polycarbonate copolymer is a polycarbonate-siloxane copolymer having a siloxane content of from about 5 wt% to about 45 wt%, based on the total weight of the polycarbonate-siloxane copolymer component. In further aspects the polycarbonate-siloxane copolymer has a siloxane content of from about 4-8 wt% (e.g., transparent EXL available from SABIC having a siloxane content of about 6 wt%), from about 18-22 wt% (e.g., opaque EXL available from SABIC having a siloxane content of about 20 wt%), and/or from about 35-45 wt% (such as a 40 wt% siloxane copolymer available from SABIC).

In further aspects the composition includes at least 30 wt%, or at least 35 wt%, or at least 40 wt%, or at least 45 wt%, or at least 50 wt%, or at least 55 wt%, or at most 75 wt%, or at most 70 wt%, or at most 65 wt%, or at most 60 wt%, or at most 55 wt%, or at most 50 wt%, or at most 45 wt%, or at most 40 wt%, of the polymer base resin.

The composition includes from about 5 wt% to about 20 wt% of a first reinforcing filler including a high modulus fiber having a tensile modulus of at least 200 gigapascals (GPa) as evaluated in accordance with ISO 11566. In some aspects the high modulus fiber is a chopped carbon fiber. The chopped carbon fiber may include a post-industrial recycled (PIR) carbon fiber.

In further aspects the high modulus fiber has a tensile modulus of at least 205 GPa, or at least 210 GPa, or at least 215 GPa, or at least 220 GPa, or at least 225 GPa, or at least 230 GPa, or at least 235 GPa, or at least 240 GPa, or at least 245 GPa, or at least 250 GPa, or at least 255 GPa, or at least 260 GPa, or at least 270 GPa, or at least 280 GPa, or at least 290 GPa, or at least 300 GPa, or at most 1000 GPa, or at most 900 GPa, or at most 800 GPa, or at most 700 GPa, or at most 600 GPa, or at most 500 GPa, or at most 400 GPa.

In certain aspects the composition includes at least 5 wt%, or at least 6 wt%, or at least 7 wt%, or at least 8 wt%, or at least 9 wt%, or at least 10 wt%, or at least 11 wt%, or at least 12 wt%, or at least 13 wt%, or at least 14 wt%, or at least 15 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, of the first reinforcing filler.

The composition includes from about 5 wt% to about 45 wt% of a second reinforcing filler including a flat glass fiber, a round glass fiber, or a combination thereof. In certain aspects the second reinforcing filler includes a low dielectric constant (Dk) glass fiber including a low Dk glass round glass fiber, a low Dk flat glass fiber, or a combination thereof. The low Dk glass fiber may have a Dk of less than 5.0 at 1 gigahertz (GHz) and a dissipation factor (Df) of less than 0.002 at 1 GHz. Dk and Df are tested in accordance with ASTM D150. In some aspects the glass fiber has a fiber length of from 2-5 millimeters (mm).

In particular aspects the composition includes at least 5 wt%, or at least 10 wt%, or at least 15 wt%, or at least 20 wt%, or at least 25 wt%, or at least 30 wt%, or at least 35 wt%, or at most 45 wt%, or at most 40 wt%, or at most 35 wt%, or at most 30 wt%, or at most 25 wt%, or at most 20 wt%, or at most 15 wt%, or at most 10 wt%, of the second reinforcing filler.

The composition includes from about 10 wt% to about 50 wt% of a combination of the first reinforcing filler and the second reinforcing filler. In other aspects the composition includes at least 10 wt%, or at least 15 wt%, or at least 20 wt%, or at least 25 wt%, or at least 30 wt%, or at least 35 wt%, or at least 40 wt%, or at least 45 wt%, or at most 50 wt%, or at most 45 wt%, or at most 40 wt%, or at most 35 wt%, or at most 30 wt%, or at most 25 wt%, or at most 20 wt%, or at most 15 wt%, of a combination of the first reinforcing filler and the second reinforcing filler.

In some aspects the composition further includes a third reinforcing filler including hollow glass beads. In certain aspects the composition includes from greater than 0 wt% to about 15 wt%, or at least 0.1 wt%, or at least 0.5 wt%, or at least 1 wt%, or at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt%, of the third reinforcing filler.

In further aspects the composition further includes from 0.1 wt% to 20 wt% of a phosphorous flame retardant. The phosphorous flame retardant may include, but is not limited to, bisphenol A bis(diphenyl phosphate) (BPADP). In specific aspects the composition includes at least 0.1 wt%, or at least 0.5 wt%, or at least 1 wt%, or at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, of the phosphorous flame retardant.

The composition includes from about 0.1 wt% to about 2 wt% of at least one additional additive. The at least one additional additive includes an acid scavenger, an anti-drip agent, an antioxidant, a stabilizer (e.g., a phosphite stabilizer), an antistatic agent, a chain extender, a colorant, a mold release agent, a flow promoter, a lubricant, a plasticizer, a quenching agent, a UV reflecting additive, an impact modifier, a blowing agent, or a combination thereof. In further aspects the composition includes at least 0.1 wt%, or at least 0.2 wt%, or at least 0.3 wt%, or at least 0.4 wt%, or at least 0.5 wt%, or at least 0.6 wt%, or at least 0.7 wt%, or at least 0.8 wt%, or at least 0.9 wt%, or at least 1.0 wt%, or at most 2.0 wt%, or at most 1.9 wt%, or at most 1.8 wt%, or at most 1.7 wt%, or at most 1.6 wt%, or at most 1.5 wt%, or at most 1.4 wt%, or at most 1.3 wt%, or at most 1.2 wt%, or at most 1.1 wt%, of the at least one additional additive.

In certain aspects the composition has a density of no more than 1.60 grams per cubic centimeter (g/cm$^3$) as evaluated in accordance with ASTM D792. In further aspects the composition has a density of from 1.2 g/cm$^3$ to 1.60 g/cm$^3$. In particular aspects the composition has a density of at least 1.25 g/cm$^3$, or at least 1.3 g/cm$^3$, or at least 1.35 g/cm$^3$, or at least 1.36 g/cm$^3$, or at least 1.37 g/cm$^3$, or at least 1.38 g/cm$^3$, or at least 1.39 g/cm$^3$, or at least 1.40 g/cm$^3$, or at least 1.41 g/cm$^3$, or at least 1.42 g/cm$^3$, or at least 1.43 g/cm$^3$, or at least 1.44 g/cm$^3$, or at least 1.45 g/cm$^3$, or at least 1.46 g/cm$^3$, or at least 1.47 g/cm$^3$, or at least 1.48 g/cm$^3$, or at least 1.49 g/cm$^3$, or at least 1.50 g/cm$^3$, or at most 1.60 g/cm$^3$, or at most 1.59 g/cm$^3$, or at most 1.58 g/cm$^3$, or at most 1.57 g/cm$^3$, or at most 1.56 g/cm$^3$, or at most 1.55 g/cm$^3$, or at most 1.54 g/cm$^3$, or at most 1.53 g/cm$^3$, or at most 1.52 g/cm$^3$, or at most 1.51 g/cm$^3$, or at most 1.50 g/cm$^3$, or at most 1.49 g/cm$^3$, or at most 1.48 g/cm$^3$, as evaluated in accordance with ASTM D792.

The composition has a flexural modulus of at least 12 gigapascals (GPa) as evaluated in accordance with ASTM D790 at 3.2 millimeters (mm) and 1.27 mm per minute (mm/min). In some aspects the composition has a flexural modulus of at least 12.5 GPa, or at least 13 GPa, or at least 13.5 GPa, or at least 14 GPa, or at least 14.5 GPa, or at least 15 GPa, or at least 15.5 GPa, or at least 16 GPa, or at least 16.5 GPa, or at least 17 GPa, or at least 17.5 GPa, or at most 30 GPa, or at most 25 GPa, or at most 20 GPa, or at most 19 GPa, or at most 18 GPa, or at most 17 GPa, or at most 16 GPa, or at most 15 GPa.

The composition has an electro-magnetic interference (EMI) shielding effectiveness no more than 35 decibels (dB) at a frequency of from 1 gigahertz (GHz) to 6 GHz as evaluated in accordance with ASTM D4935. In further aspects the composition has an EMI shielding effectiveness of no more than 34 dB, or no more than 33 dB, at a frequency of from 1-6 GHz as evaluated in accordance with ASTM D4935. In specific aspects the composition has an EMI shielding effectiveness of: no more than 30 dB at a frequency of 1 GHz; no more than 30 dB at a frequency of 3 GHz; or no more than 33 dB at a frequency of 6 GHz.

In particular aspects the composition has an EMI shielding effectiveness at a frequency of 1 GHz of no more than 29 dB, or no more than 28 dB, or no more than 27 dB, or no more than 26 dB, or no more than 25 dB, or no more than 24 dB, or no more than 23 dB, or no more than 22 dB, or no more than 21 dB, or no more than 20 dB, or no more than 19 dB, or no more than 18 dB, or no more than 17 dB, or no more than 16 dB, or no more than 15 dB, or no more than 14 dB, or no more than 13 dB, or no more than 12 dB, or no more than 11 dB, or no more than 10 dB, or no more than 9 dB, or no more than 8 dB, or no more than 7 dB, or no more than 6 dB, or no more than 5 dB, or at least 1 dB, or at least 2 dB, or at least 3 dB, or at least 4 dB.

In specific aspects the composition has an EMI shielding effectiveness at a frequency of 3 GHz of no more than 29 dB, or no more than 28 dB, or no more than 27 dB, or no more than 26 dB, or no more than 25 dB, or no more than 24 dB, or no more than 23 dB, or no more than 22 dB, or no more than 21 dB, or no more than 20 dB, or no more than 19 dB, or no more than 18 dB, or no more than 17 dB, or no more than 16 dB, or no more than 15 dB, or no more than 14 dB, or no more than 13 dB, or no more than 12 dB, or no more than 11 dB, or no more than 10 dB, or no more than 9 dB, or no more than 8 dB, or no more than 7 dB, or no more than 6 dB, or at least 1 dB, or at least 2 dB, or at least 3 dB, or at least 4 dB, or at least 5 dB.

In certain aspects the composition has an EMI shielding effectiveness at a frequency of 6 GHz of no more than 32 dB, or no more than 31 dB, or no more than 30 dB, or no more than 29 dB, or no more than 28 dB, or no more than 27 dB, or no more than 26 dB, or no more than 25 dB, or no more than 24 dB, or no more than 23 dB, or no more than 22 dB, or no more than 21 dB, or no more than 20 dB, or no more than 19 dB, or no more than 18 dB, or no more than 17 dB, or no more than 16 dB, or no more than 15 dB, or no more than 14 dB, or no more than 13 dB, or no more than 12 dB, or at least 1 dB, or at least 2 dB, or at least 3 dB, or at least 4 dB, or at least 5 dB, or at least 6 dB, or at least 7 dB, or at least 8 dB, or at least 9 dB, or at least 10 dB.

**Methods of Manufacture**

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

## Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In specific aspects, the article is a component of an electronic or electric device.

Various combinations of elements of this disclosure are encompassed by this disclosure, e.g., combinations of elements from dependent claims that depend upon the same independent claim.

## Aspects of the Disclosure

In various aspects, the present disclosure pertains to and includes at least the following aspects.

Aspect 1. A thermoplastic composition comprising:

a) from about 30 wt% to about 75 wt% of a polymer base resin comprising polycarbonate (PC), polybutylene terephthalate (PBT), polyamine (PA), polyphenylene sulfide (PPS), polyetherimide (PEI), polyphenylene oxide (PPO), copolymers thereof, or a combination thereof;

b) from about 5 wt% to about 20 wt% of a first reinforcing filler comprising a high modulus fiber having a tensile modulus of at least 200 gigapascals (GPa) as evaluated in accordance with ISO 11566;

c) from about 5 wt% to about 45 wt% of a second reinforcing filler comprising a flat glass fiber, a round glass fiber, or a combination thereof; and

d) from about 0.1 wt% to about 2 wt% of at least one additional additive,

wherein

the composition comprises from about 10 wt% to about 50 wt% of a combination of the first reinforcing filler and the second reinforcing filler,

the combined weight percent value of all components does not exceed 100 wt%, and all weight percent values are based on the total weight of the composition,

the composition has a density of no more than 1.60 grams per cubic centimeter (g/cm$^3$) as evaluated in accordance with ASTM D792,

the composition has a flexural modulus of at least 12 gigapascals (GPa) as evaluated in accordance with ASTM D790 at 3.2 millimeters (mm) and 1.27 mm per minute (mm/min), and

the composition has an electro-magnetic interference (EMI) shielding effectiveness of no more than 35 decibels (dB) at a frequency of from 1 gigahertz (GHz) to 6 GHz as evaluated in accordance with ASTM D4935.

Aspect 2. The thermoplastic composition according to Aspect 1, wherein the second reinforcing filler comprises a low dielectric constant (Dk) glass fiber comprising a low Dk glass round glass fiber, a low Dk flat glass fiber, or a combination thereof,
wherein the low Dk glass fiber has a Dk of less than 5.0 at 1 gigahertz (GHz) and a dissipation factor (Df) of less than 0.002 at 1 GHz, and wherein Dk and Df are tested in accordance with ASTM D150.

Aspect 3. The thermoplastic composition according to Aspect 1 or 2, wherein the high modulus fiber comprises chopped carbon fiber.

Aspect 4. The thermoplastic composition according to Aspect 3, wherein the carbon fiber is a post-industrial recycled (PIR) carbon fiber.

Aspect 5. The thermoplastic composition according to any of Aspects 1 to 4, wherein the composition further comprises from 0.1 wt% to 20 wt% of a phosphorous flame retardant.

Aspect 6. The thermoplastic composition according to Aspect 5, wherein the phosphorous flame retardant comprises bisphenol A bis(diphenyl phosphate) (BPADP).

Aspect 7. The thermoplastic composition according to any of Aspects 1 to 6, wherein the composition further comprises a third reinforcing filler comprising hollow glass beads.

Aspect 8. The thermoplastic composition according to Aspect 7, wherein the composition comprises from greater than 0 wt% to about 10 wt% of the hollow glass beads.

Aspect 9. The thermoplastic composition according to any of Aspects 1 to 8, wherein the at least one additional additive comprises an acid scavenger, an anti-drip agent, an antioxidant, a stabilizer, an antistatic agent, a chain extender, a colorant, a mold release agent, a flow promoter, a lubricant, a plasticizer, a quenching agent, a UV reflecting additive, an impact modifier, a blowing agent, or a combination thereof.

Aspect 10. The thermoplastic composition according to any of Aspects 1 to 9, wherein the composition comprises from about 30 wt% to about 45 wt% of the polymer base resin.

Aspect 11. The thermoplastic composition according to any of Aspects 1 to 10, wherein the composition comprises from about 5 wt% to about 35 wt% of the second reinforcing filler.

Aspect 12. The thermoplastic composition according to any of Aspects 1 to 11, wherein the flat glass fiber or the low dielectric constant glass fiber have a length of from 2-5 mm.

Aspect 13. The thermoplastic composition according to any of Aspects 1 to 12, wherein the composition has a density of no more than 1.57 grams per cubic centimeter (g/cm$^3$) as evaluated in accordance with ASTM D792.

Aspect 14. The thermoplastic composition according to any of Aspects 1 to 13, wherein the composition has a density of no more than 1.48 grams per cubic centimeter (g/cm$^3$) as evaluated in accordance with ASTM D792.

Aspect 15. The thermoplastic composition according to any of Aspects 1 to 14, wherein the composition has a flexural modulus of at least 14 gigapascals (GPa) as evaluated in accordance with ASTM D790 at 3.2 mm and 1.27 mm/min.

Aspect 16. The thermoplastic composition according to any of Aspects 1 to 15, wherein the composition has an EMI shielding effectiveness of no more than 33 dB at a frequency of from 1-6 GHz as evaluated in accordance with ASTM D4935.

Aspect 17. The thermoplastic composition according to any of Aspects 1 to 16, wherein the composition has an EMI shielding effectiveness of:

no more than 30 dB at a frequency of 1 GHz;
no more than 30 dB at a frequency of 3 GHz; or
no more than 33 dB at a frequency of 6 GHz.

Aspect 18. An article comprising the thermoplastic composition according to any of Aspects 1 to 17.

Aspect 19. The article according to Aspect 18, wherein the article is a component of an electronic or electric device.

**EXAMPLES**

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions described herein were extruded into pellets according to the conditions set forth in Table 1. The extruded pellets were injection molded according to the molding profile set forth in Table 2:

**Table 1 - Extrusion Conditions**

| Parameters | Unit | Condition |
|---|---|---|
| Compounder Type | NONE | TEM-37BS |
| Barrel Size | mm | 1500 |
| Die | mm | 4 |
| Zone 1 Temp | °C | 50 |
| Zone 2 Temp | °C | 100 |
| Zones 3-11 Temp | °C | 270 |
| Die Temp | °C | 280 |
| Screw speed | rpm | 350 |
| Throughput | kg/hr | 40 |
| Torque | % | 40-50 |
| Vacuum 1 | bar | -0.08 |
| Side Feeder 1 speed | rpm | 250 |
| Melt temperature | °C | 275-285 |

**Table 2 - Molding Profile**

| Parameters | Unit | Condition |
|---|---|---|
| Pre-drying time | Hour | 4 |
| Pre-drying temp | °C | 100 |
| Molding Machine | NONE | FANUC; SE180; UH110 |
| Mold Type (insert) | NONE | Tensile, Flexural, and IZOD bars, 75×75×1.5 mm parts UL bars at 0.8 mm |
| Hopper temp | °C | 50 |
| Zone 1 temp | °C | 280-290 |
| Zone 2-3 temp | °C | 290-300 |
| Nozzle temp | °C | 290-300 |
| Mold temp | °C | 80 |
| Screw speed | rpm | 100 |
| Back pressure | kgf/cm$^2$ | 30 |
| Cooling time | s | 15 |
| Injection speed | mm/s | 50-100 |
| Holding pressure | kgf/cm$^2$ | 800-1000 |
| Max. Injection pressure | kgf/cm$^2$ | 1000-1500 |

Comparative and example compositions included one or more of the components described in Table 3:

**Table 3 - Components**

| Component | Description | Source |
|---|---|---|
| PC | PCP 1300 polycarbonate derived from bisphenol A (22,000 Mw) | SABIC |
| EXL | C9030P PC/Siloxane copolymer, opaque, 20 wt% siloxane content | SABIC |
| BPADP | Bisphenol A bis(diphenyl phosphate), flame retardant | Daihachi Chemical |
| CF1 | Post-Industrial Recycled (PIR) carbon fiber, tensile modulus ~ 240 GPa | Zoltek |
| CF2 | PIR carbon fiber, MIT 0.25 ultra chopped carbon fiber, tensile modulus 260-310 GPa | Carbon Conversions Inc (CCI) |
| GF (flat) | Flat cross section E-glass fiber (aspect ratio 4:1) | Nittobo |
| GF (low Dk round) | Low Dk round glass fiber, Dk of less than 5.0 at 1 gigahertz (GHz) and a dissipation factor (Df) of less than 0.002 at 1 GHz, tested in accordance with ASTM D150 | CPIC |
| GF (low Dk flat) | Low Dk glass fiber with flat cross section (aspect ratio 3:1), , Dk of less than 5.0 at 1 gigahertz (GHz) and a dissipation factor (Df) of less than 0.002 at 1 GHz, tested in accordance with ASTM D150 | CPIC |
| GF (round) | Round E-glass fiber, ECS10-03-534A | Jushi |
| HGB | Hollow glass beads, S60HS | 3M |
| PETS | Pentaerythritol tetrastearate, mold release | FACI |
| TSAN | Styrene acrylonitrile-encapsulated polytetrafluorethylene (SAN-PTFE), anti-drip | SABIC |
| IRG1076 | Irganox® 1076, antioxidant | BASF |
| IRG168 | Irgafos 168, phosphite stabilizer | BASF |

Comparative and example compositions were prepared as shown in Table 4A. Polycarbonate and a polycarbonate-siloxane copolymer (EXL) were used as the base resins. BPADP included as a flame retardant (FR) for thin-wall flame retardancy. To reduce the EMI shielding properties, glass fiber and/or carbon fiber were used as reinforcing fillers. From example compositions E1.1 to E1.3, the carbon fiber content decreased from 20 wt% to 5 wt%, while glass fiber content was increased from 10 wt% to 40 wt%. In the two comparative examples of C1.1 and C1.2, carbon fiber was used as the reinforcing agent with a loading of 25 wt% and 20 wt%, respectively. In comparative composition C1.3, glass fiber was used as the reinforcing agent with the loading of 50%. The components in the following tables are listed in terms of weight percent (wt%), and total 100 wt%.

**Table 4A** - **Comparative and Example Compositions**

| Component | C1.1 | C1.2 | C1.3 | E1.1 | E1.2 | E1.3 |
|---|---|---|---|---|---|---|
| PC | 53.9 | 58.9 | 28.9 | 48.9 | 38.9 | 33.9 |
| EXL | 9 | 9 | 9 | 9 | 9 | 9 |
| BPADP | 11 | 11 | 11 | 11 | 11 | 11 |
| CF1 | 25 | 20 | | 20 | 10 | 5 |
| GF (flat) | | | 50 | 10 | 30 | 40 |
| PETS | 0.3 | 0.3 | 0.3 | 0.3 | 0.3 | 0.3 |
| TSAN | 0.6 | 0.6 | 0.6 | 0.6 | 0.6 | 0.6 |
| IRG1076 | 0.1 | 0.1 | 0.1 | 0.1 | 0.1 | 0.1 |
| IRG168 | 0.1 | 0.1 | 0.1 | 0.1 | 0.1 | 0.1 |
| **Total (wt%)** | 100 | 100 | 100 | 100 | 100 | 100 |

Properties of the Table 4A compositions were evaluated and are reported in Table 4B. Properties were evaluated according to the standards and conditions provided in the table. HDT refers to heat distortion temperature:

**Table 4B - Properties of Table 4A Compositions**

| Typical Property | Test Condition | Test Standard | Unit | C1.1 | C1.2 | C1.3 | E1.1 | E1.2 | E1.3 |
|---|---|---|---|---|---|---|---|---|---|
| Density | Using Izod bars | ASTM D792 | g/cm$^3$ | 1.311 | 1.286 | 1.643 | 1.364 | 1.491 | 1.566 |
| UL rating (FR) | 0.8 mm | UL 94 | / | pass | / | / | pass | / | / |
| | 0.8 mm, aged | UL94 | / | pass | / | / | pass | / | / |
| Total flame time of 5 specimens | 0.8 mm | UL 94 | s | 30 | / | / | 34 | / | / |
| | 0.8 mm, aged | UL 94 | s | 28 | / | / | 39 | / | / |
| NII | 23 °C, 5 lbf/ft | ASTM D256 | J/m | 43 | 44 | 112 | 48 | 77 | 85 |
| UNII | 23 °C, 5 lbf/ft | ASTM D256 | J/m | 277 | 373 | 543 | 349 | 427 | 428 |
| HDT | 1.82 MPa, 3.2 mm | ASTM D648 | °C | 96 | 97 | 83 | 93 | 89 | 84 |
| HDT | 0.45MPa, 3.2 mm | ASTM D648 | °C | 100 | 102 | 93 | 98 | 94 | 92 |
| Flexural Modulus | 3.2 mm, 1.27 mm/min | ASTM D790 | MPa | 16200 | 13400 | 15300 | 15900 | 15800 | 15700 |
| Flexural Strength | At yield | ASTM D790 | MPa | 219 | 191 | 236 | 208 | 218 | 230 |
| Tensile Modulus | 5 mm/min | ASTM D638 | MPa | 19700 | 16650 | 18330 | 19320 | 18570 | 18650 |
| Tensile Strength | At break | ASTM D638 | MPa | 151 | 147 | 161 | 153 | 155 | 158 |
| Tensile Elongation | At break | ASTM D638 | % | 2.0 | 2.1 | 2.2 | 2.1 | 2.1 | 2.1 |
| EMI shielding effectiveness | At 1GHz | ASTM D4935 | dB | 32.6 | 30.9 | 3.1 | 28.3 | 13.4 | 5.7 |
| | At 3GHz | ASTM D4935 | dB | 34.0 | 31.7 | 0.9 | 28.9 | 16.0 | 6.2 |
| | At 6GHz | ASTM D4935 | dB | 37.7 | 34.9 | 0.7 | 32.0 | 19.6 | 11.1 |

Criteria conditions for the UL94 vertical burn ratings are provided in Table 5:

**Table 5 - UL94 Vertical Burn Rating**

| Criteria conditions | V0 | V1 | V2 |
|---|---|---|---|
| Afterflame time for each individual specimen $t_1$ or $t_2$ | $\leq 10s$ | $\leq 30s$ | $\leq 30s$ |
| Total afterflame time for any condition set ($t_1$ plus $t_2$ for the 5 specimens) | $\leq 50s$ | $\leq 250s$ | $\leq 250s$ |
| Afterflame plus afterglow time for each individual specimen after the second flame application ($t_2+t_3$) | $\leq 30s$ | $\leq 60s$ | $\leq 60s$ |
| Afterflame or afterglow of any specimen up to the holding clamp | No | No | No |

(continued)

| Criteria conditions | V0 | V1 | V2 |
|---|---|---|---|
| Cotton indicator ignited by flaming particles or drops | No | No | Yes |

From the results in Table 4B the following observations were made:

a) **Comparing C1.1 to C1.2.** A decrease of the carbon fiber content resulted in an improvement (reduction) of the EMI shielding effectiveness but with a similar reduction in modulus. A decrease of 5 wt% carbon fiber caused a drop of about 3 gigapascals (GPa) in modulus (both flexural and tensile).

b) **Comparing E1.1 to C1.1 and C1.2.** When 20 wt% carbon fiber and 10 wt% glass fiber were used as the filler (E1.1), the modulus of the composition was comparable to that with 25 wt% carbon fiber (C1.1, flexural modulus as high as 16GPa). However, the EMI shielding effectiveness substantially improved-it was about 15% lower at a frequency of 1 to 6 gigahertz (GHz) (compare E1.1 to C1.1). Moreover, although the carbon fiber content was the same for compositions E1.1 and C1.2, the EMI shielding effectiveness of the E1.1 composition was lower than that of C1.2 (2-3 decibels (dB) lower), which indicates an unexpected synergy between the carbon fiber and glass fiber for improving the EMI shielding effectiveness.

c) **Comparing E1.2 and E1.3.** By decreasing the carbon fiber loading and increasing the glass fiber loading, the modulus of the compositions can maintained (e.g., FM about 16 GPa), but with a further improvement (decrease) in EMI shielding effectiveness. When 10 wt% carbon fiber and 30 wt% glass fiber were used as the filler (E1.2), the EMI shielding effectiveness of the composition from 1 to 6 GHz was only 41% to 49% of the control sample in C1.1 (i.e., 51% to 59% lower EMI shielding effectiveness). Moreover, with the increase of the glass fiber content, impact strength (NII) of the compositions increased, up to 97% higher (E1.3) than comparative composition C1.1.

d) **Comparing E1.1, E1.2 and E1.3 to C1.3.** With both carbon fiber and glass fiber included as the filler, the example compositions had high modulus and much lower density (5-20% lower) than comparative composition C1.3 which only included glass fiber.

e) The example compositions had good thin-wall FR performance with a V0 rating at 0.8mm.

In summary, by including both carbon fiber and glass fiber as a reinforcing filler, the example compositions had a very high modulus (FM about 16GPa) and improved EMI shielding effectiveness as compared to compositions including only carbon fiber as the filler, which demonstrates the advantage of including both reinforcing fillers. It is expected that similar improvements could be achieved with the use of other high modulus reinforcing fillers in addition to or in place of the carbon fiber. An example of such a filler is basalt fiber.

Additional example compositions where prepared as shown in Table 6A. Example composition E2.1 included flat E-glass fiber. Example compositions E2.2 and E2.3 included low Dk round glass fiber with different loadings. Example composition E2.4 included low Dk glass fiber with a flat cross section (length/width ratio 3:1). Example compositions E2.5 and E2.6 included a high modulus carbon fiber as the filler in combination with a low Dk round glass fiber and conventional round E-glass fiber, respectively. Properties of the Table 6A compositions were evaluated and are provided in Table 6B:

**Table 6A - Example Compositions with Various Types of GF**

| Component | E2.1 | E2.2 | E2.3 | E2.4 | E2.5 | E2.6 |
|---|---|---|---|---|---|---|
| PC | 43.9 | 43.9 | 42.9 | 42.9 | 42.9 | 42.9 |
| EXL | 9 | 9 | 7 | 7 | 7 | 7 |
| BPADP | 11 | 11 | 9 | 9 | 9 | 9 |
| CF1 | 15 | 15 | 10 | 10 | | |
| CF2 | | | | | 10 | 10 |
| GF (flat) | 20 | | | | | |
| GF (low Dk round) | | 20 | 30 | | 30 | |
| GF (low Dk flat) | | | | 30 | | |
| GF (round) | | | | | | 30 |
| PETS | 0.3 | 0.3 | 0.3 | 0.3 | 0.3 | 0.3 |
| TSAN | 0.6 | 0.6 | 0.6 | 0.6 | 0.6 | 0.6 |

(continued)

| Component | E2.1 | E2.2 | E2.3 | E2.4 | E2.5 | E2.6 |
|---|---|---|---|---|---|---|
| IRG1076 | 0.1 | 0.1 | 0.1 | 0.1 | 0.1 | 0.1 |
| IRG168 | 0.1 | 0.1 | 0.1 | 0.1 | 0.1 | 0.1 |
| Total (wt%) | 100 | 100 | 100 | 100 | 100 | 100 |

### Table 6B - Properties of Table 6A Compositions

| Typical Property | Test Condition | Test Standard | Unit | E2.1 | E2.2 | E2.3 | E2.4 | E2.5 | E2.6 |
|---|---|---|---|---|---|---|---|---|---|
| Density | Using Izod bars | ASTM D792 | g/cm$^3$ | 1.429 | 1.407 | 1.455 | 1.442 | 1.452 | 1.489 |
| UL rating | 0.8 mm | UL 94 | / | pass | pass | pass | pass | / | / |
|  | 0.8 mm, aged | UL94 | / | pass | pass | pass | pass | / | / |
| Total flame time of 5 specimens | 0.8 mm | UL 94 | s | 27 | 24 | 41 | 34 | / | / |
|  | 0.8 mm, aged | UL 94 | s | 39 | 36 | 36 | 40 | / | / |
| NII | 23 °C, 5 lbf/ft | ASTM D256 | J/m | 64 | 61 | 78 | 101 | 92 | 95 |
| UNII | 23 °C, 5 lbf/ft | ASTM D256 | J/m | 368 | 390 | 481 | 523 | 581 | 745 |
| HDT | 1.82 MPa, 3.2mm | ASTM D648 | °C | 89 | 89 | 94 | 95 | 95 | 96 |
| HDT | 0.45 MPa, 3.2 mm | ASTM D648 | °C | 95 | 94 | 101 | 102 | 102 | 102 |
| Flexural Modulus | 3.2 mm, 1.27 mm/min | ASTM D790 | MPa | 16100 | 15400 | 14800 | 14000 | 15600 | 17700 |
| Flexural Strength | At yield | ASTM D790 | MPa | 227 | 209 | 217 | 226 | 235 | 261 |
| Tensile Modulus | 5 mm/min | ASTM D638 | MPa | 19210 | 18160 | 15950 | 15680 | 16830 | 19010 |
| Tensile Strength | At break | ASTM D638 | MPa | 169 | 152 | 151 | 160 | 152 | 171 |
| Tensile Elongation | At break | ASTM D638 | % | 2.1 | 2.0 | 1.8 | 1.9 | 2.2 | 2.3 |
| EMI shielding effectiveness | At 1GHz | ASTM D4935 | dB | 23.0 | 15.6 | 7.4 | 13.0 | 6.1 | 7.7 |
|  | At 3GHz | ASTM D4935 | dB | 24.1 | 17.4 | 10.2 | 15.9 | 9.8 | 12.7 |
|  | At 6GHz | ASTM D4935 | dB | 27.1 | 20.4 | 14.9 | 19.5 | 15.2 | 16.8 |

From the results in Table 6B the following observations were made:

a) **Comparing E2.2 to E2.1 and E2.3 to E2.4.** Compositions including the low Dk round glass fiber had substantially improved (reduced) EMI shielding performance as compared to compositions including a flat shape E-glass fiber and a flat shape low Dk glass fiber (25-43% lower for the shielding effectiveness at 1-6GHz). When 10 wt% carbon fiber and 30 wt% low Dk round glass fiber were used as the filler (E2.3), shielding effectiveness of the composition was only 7-15dB at 1-6GHz. Further, the composition showed high modulus (flexural modulus of about 15GPa) with relatively low density (1.455 g/cm$^3$).

b) **Comparing E2.5 to E2.3.** When a high modulus carbon fiber was used (E2.5), mechanical performance of the composition was further improved (tensile and flexural modulus about 1 GPa higher) with similar EMI shielding performance (6-15 dB at 1-6GHz).

c) **Comparing E2.6 to E2.5.** When a conventional round E-glass fiber was used, the mechanical performance of was good (flexural modulus reached 17.7 GPa) with slightly higher but still acceptable EMI shielding performance (7.7-17 dB at 1-6 GHz). However, the density of the composition including round E-glass fiber was higher than the composition including a low Dk round glass fiber (from 1.452 to 1.489 g/cm$^3$).

Additional example compositions were prepared as shown in Table 7A. Example compositions E3.1 and E3.2 included 5 wt% and 10 wt% hollow glass beads, respectively. Properties of the Table 6A compositions were evaluated and are provided in Table 7B:

**Table 7A** - **Example Compositions**

| Component | E3.1 | E3.2 |
|---|---|---|
| PC | 37.9 | 32.9 |
| EXL | 7 | 7 |
| BPADP | 9 | 9 |
| CF1 | 10 | 10 |
| GF (low Dk round) | 30 | 30 |
| HGB | 5 | 10 |
| PETS | 0.3 | 0.3 |
| TSAN | 0.6 | 0.6 |
| IRG1076 | 0.1 | 0.1 |
| IRG168 | 0.1 | 0.1 |
| **Total (wt%)** | 100 | 100 |

**Table 7B - Properties of Table 7A Compositions**

| Property | Conditions | Standard | Unit | E3.1 | E3.2 |
|---|---|---|---|---|---|
| Density | Using Izod bars | ASTM D792 | g/cm$^3$ | 1.438 | 1.419 |
| NII | 23 °C, 5 lbf/ft | ASTM D256 | J/m | 104 | 86 |
| UNII | 23 °C, 5 lbf/ft | ASTM D256 | J/m | 660 | 593 |
| HDT | 1.82 MPa, 3.2 mm | ASTM D648 | °C | 91 | 87 |
| Flexural Modulus | 3.2 mm, 1.27 mm/min | ASTM D790 | MPa | 14700 | 15300 |
| Flexural Strength | At yield | ASTM D790 | MPa | 237 | 222 |
| Tensile Modulus | 5 mm/min | ASTM D638 | MPa | 16040 | 17120 |
| Tensile Strength | At break | ASTM D638 | MPa | 160 | 129 |
| Tensile Elongation | At break | ASTM D638 | % | 2.0 | 1.3 |
| EMI shielding effectiveness | At 1GHz | ASTM D4935 | dB | 4.4 | 4.1 |
| | At 3GHz | ASTM D4935 | dB | 5.9 | 5.4 |
| | At 6GHz | ASTM D4935 | dB | 11.3 | 11.2 |

From the results in Table 7B the following observations were made:

**Comparing E3.1 and E3.2 to E2.3.** When hollow glass beads were added, EMI shielding performance and density of the compositions can be further improved while maintaining good mechanical performance (flexural modulus about 15 GPa). Considering example composition E3.1 including 5 wt% hollow glass beads, the EMI shielding effectiveness was decreased to 4.4-11.3 dB at 1-6 GHz with a density only 1.438g/cm$^3$. Comparing the EMI shielding performance of this composition to a composition with only carbon fiber as the filler (comparative composition C1.1), the shielding effectiveness of the composition was 70% to 86% lower than the control composition.

The present disclosure describes thermoplastic compositions with a very high modulus and low EMI shielding effectiveness. From the examples, it was observed that by using carbon fiber and glass fiber as a reinforcing agent, and in some aspects with hollow glass beads, the example compositions had a flexural modulus as high as about 15 GPa and much lower EMI shielding effectiveness (up to 86% lower) than compositions including only carbon fiber as the filler. Increasing the glass fiber content can improve impact strength (NII up to 97% higher than the control). Thin wall FR performance (V0 at 0.8 mm) may be achieved with the use of a phosphorous FR additive (BPADP). The example compositions described herein with very high modulus and low EMI shielding performance have wide applicability in electric and electronic related fields.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

**Claims**

1. A thermoplastic composition comprising:

    a) from about 30 wt% to about 75 wt% of a polymer base resin comprising polycarbonate (PC), polybutylene terephthalate (PBT), polyamine (PA), polyphenylene sulfide (PPS), polyetherimide (PEI), polyphenylene oxide (PPO), copolymers thereof, or a combination thereof;
    b) from about 5 wt% to about 20 wt% of a first reinforcing filler comprising a high modulus fiber having a tensile modulus of at least 200 gigapascals (GPa) as evaluated in accordance with ISO 11566;
    c) from about 5 wt% to about 45 wt% of a second reinforcing filler comprising a flat glass fiber, a round glass fiber, or a combination thereof; and
    d) from about 0.1 wt% to about 2 wt% of at least one additional additive,

    wherein

    the composition comprises from about 10 wt% to about 50 wt% of a combination of the first reinforcing filler and the second reinforcing filler,
    the combined weight percent value of all components does not exceed 100 wt%, and all weight percent values are based on the total weight of the composition,
    the composition has a density of no more than 1.60 grams per cubic centimeter (g/cm$^3$) as evaluated in accordance with ASTM D792,
    the composition has a flexural modulus of at least 12 gigapascals (GPa) as evaluated in accordance with ASTM D790 at 3.2 millimeters (mm) and 1.27 mm per minute (mm/min), and
    the composition has an electro-magnetic interference (EMI) shielding effectiveness of no more than 35 decibels (dB) at a frequency of from 1 gigahertz (GHz) to 6 GHz as evaluated in accordance with ASTM D4935.

2. The thermoplastic composition according to claim 1, wherein the second reinforcing filler comprises a low dielectric constant (Dk) glass fiber comprising a low Dk glass round glass fiber, a low Dk flat glass fiber, or a combination thereof, wherein the low Dk glass fiber has a Dk of less than 5.0 at 1 gigahertz (GHz) and a dissipation factor (Df) of less than 0.002 at 1 GHz, and wherein Dk and Df are tested in accordance with ASTM D150.

3. The thermoplastic composition according to claim 1 or 2, wherein the high modulus fiber comprises chopped carbon fiber.

4. The thermoplastic composition according to claim 3, wherein the carbon fiber is a post-industrial recycled (PIR) carbon fiber.

5. The thermoplastic composition according to any of claims 1 to 4, wherein the composition further comprises from 0.1 wt% to 20 wt% of a phosphorous flame retardant.

6. The thermoplastic composition according to claim 5, wherein the phosphorous flame retardant comprises bisphenol A bis(diphenyl phosphate) (BPADP).

7. The thermoplastic composition according to any of claims 1 to 6, wherein the composition further comprises a third reinforcing filler comprising hollow glass beads.

8. The thermoplastic composition according to claim 7, wherein the composition comprises from greater than 0 wt% to about 10 wt% of the hollow glass beads.

9. The thermoplastic composition according to any of claims 1 to 8, wherein the at least one additional additive comprises an acid scavenger, an anti-drip agent, an antioxidant, a stabilizer, an antistatic agent, a chain extender, a colorant, a mold release agent, a flow promoter, a lubricant, a plasticizer, a quenching agent, a UV reflecting additive, an impact modifier, a blowing agent, or a combination thereof.

10. The thermoplastic composition according to any of claims 1 to 9, wherein the flat glass fiber or the low dielectric constant glass fiber have a length of from 2-5 mm.

11. The thermoplastic composition according to any of claims 1 to 10, wherein the composition has a density of no more than 1.57 grams per cubic centimeter (g/cm$^3$) as evaluated in accordance with ASTM D792.

12. The thermoplastic composition according to any of claims 1 to 11, wherein the composition has a flexural modulus of at least 14 gigapascals (GPa) as evaluated in accordance with ASTM D790 at 3.2 mm and 1.27 mm/min.

13. The thermoplastic composition according to any of claims 1 to 12, wherein the composition has an EMI shielding effectiveness of no more than 33 dB at a frequency of from 1-6 GHz as evaluated in accordance with ASTM D4935.

14. The thermoplastic composition according to any of claims 1 to 13, wherein the composition has an EMI shielding effectiveness of:

   no more than 30 dB at a frequency of 1 GHz;
   no more than 30 dB at a frequency of 3 GHz; or
   no more than 33 dB at a frequency of 6 GHz.

15. An article comprising the thermoplastic composition according to any of claims 1 to 14, wherein the article is a component of an electronic or electric device.

European Patent Office

Europäisches Patentamt
European Patent Office
Office européen des brevets

# EUROPEAN SEARCH REPORT

**Application Number**

EP 24 19 3005

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2014/093712 A1 (TONG WU [CN] ET AL) 3 April 2014 (2014-04-03) * paragraph [0001]; example composition S1; tables 3-4 * ----- | 1-15 | INV. C08L65/00 C08L67/00 C08L69/00 C08L71/00 C08L77/00 |
| Y | US 7 939 167 B2 (CHEIL IND INC [KR]) 10 May 2011 (2011-05-10) * column 1, lines 54-57 * * example 6; table 1 * ----- | 1-15 | |
| Y | US 2009/280311 A1 (KUMAZAWA TERUHISA [JP] ET AL) 12 November 2009 (2009-11-12) * examples 1-9; tables 1-2 * ----- | 1-15 | |

| | TECHNICAL FIELDS SEARCHED (IPC) |
|---|---|
| | C09J C08L |

The present search report has been drawn up for all claims

| Place of search | Date of completion of the search | Examiner |
|---|---|---|
| The Hague | 10 January 2025 | Bezard, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 3005

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2025

| Patent document cited in search report | Publication date | Patent family member(s) | | Publication date |
|---|---|---|---|---|
| US 2014093712 A1 | 03-04-2014 | CN | 104684985 A | 03-06-2015 |
| | | EP | 2900751 A2 | 05-08-2015 |
| | | KR | 20150065764 A | 15-06-2015 |
| | | US | 2014093712 A1 | 03-04-2014 |
| | | WO | 2014049572 A2 | 03-04-2014 |
| US 7939167 B2 | 10-05-2011 | EP | 2204403 A1 | 07-07-2010 |
| | | US | 2010163795 A1 | 01-07-2010 |
| US 2009280311 A1 | 12-11-2009 | CN | 101432364 A | 13-05-2009 |
| | | EP | 2025716 A1 | 18-02-2009 |
| | | KR | 20090014260 A | 09-02-2009 |
| | | US | 2009280311 A1 | 12-11-2009 |
| | | WO | 2007138743 A1 | 06-12-2007 |

EPO FORM P0459

For more details about this annex : see Official Journal of the European Patent Office, No. 12/82